# EUROPÄISCHE PATENTSCHRIFT

(11) **EP 3 234 548 B1**
(45) Veröffentlichungstag und Bekanntmachung des Hinweises auf die Patenterteilung: **20.01.2021**
(21) Anmeldenummer: 15795186.4
(22) Anmeldetag: 18.11.2015
(51) Int. Cl.: G01N 11/04, G01N 9/00

(54) **MESSANORDNUNG UND VERFAHREN ZUM MESSEN DER DICHTE VON FLIESSFÄHIGEN MEDIEN**
MEASURING ARRANGEMENT AND METHOD FOR MEASURING THE DENSITY OF FLOWABLE MEDIA
ENSEMBLE DE MESURE ET PROCÉDÉ DE MESURE DE LA DENSITÉ DE MILIEUX COULANTS

(30) Priorität: 19.12.2014 DE 102014119212
(43) Veröffentlichungstag der Anmeldung: 25.10.2017
(73) Patentinhaber: Endress+Hauser Flowtec AG, 4153 Reinach (CH)
(72) Erfinder: HUBER, Christof, 3007 Bern (CH); LEENHOVEN, Ton, 83780 Flayosc (FR)
(74) Vertreter: Andres, Angelika Maria
(86) Internationale Anmeldenummer: PCT/EP2015/076903
(87) Internationale Veröffentlichungsnummer: WO 2016/096297

(56) Entgegenhaltungen:
- EP-A1- 0 848 811
- WO-A2-2009/076287
- US-A- 5 339 258
- KALOTAY P: "Density and viscosity monitoring systems using Coriolis flow meters", ISA TRANSACTIONS, INSTRUMENT SOCIETY OF AMERICA. PITTSBURGH, US, Bd. 38, Nr. 4, 25. November 1999 (1999-11-25), Seiten 303-310, XP004244796, ISSN: 0019-0578, DOI: 10.1016/S0019-0578(99)00023-3

## Beschreibung

Die vorliegende Erfindung betrifft eine Messanordnung und Verfahren zum Messen der Dichte von fließfähigen Medien, insbesondere mit einem schwingenden Messrohr, welches den Messstoff enthält. Anhand der Schwingungseigenschaften, insbesondere der Resonanzfrequenz des Messrohrs kann die Dichte bestimmt werden. Derartige Messvorrichtungen weisen eine Querempfindlichkeit zur Viskosität des Mediums auf, die mit abnehmendem Messrohrdurchmesser zunimmt. Andererseits ermöglichen gerade Messrohre mit kleinen Durchmessern eine Dichtemessung mit geringsten Probenmengen. Zudem weisen Messrohre mit kleinen Durchmessern tendenziell eine höhere Eigenfrequenz auf, so dass eine genaue Frequenzmessung einfach zu realisieren ist. Insofern sind Dichtemessungen mit schwingenden Messrohren durchaus attraktiv, wobei insbesondere bei Messrohren mit kleinen Durchmessern die Querempfindlichkeit zur Viskosität zu berücksichtigen ist.

Kalotay et al. beschreiben im Patent US 5, 359,881 ein Viskosimeter, welches ein Coriolis-Massedurchflussmessgerät mit integriertem Differenzdrucksensor aufweist, welcher den Druckabfall über den Messrohren des Coriolis-Massedurchflussmessgeräts ermittelt. Anhand des mittels des Coriolis-Massedurchflussmessgeräts ermittelten Massedurchfluss und der mittels des Coriolis-Massedurchflussmessgeräts ermittelten Dichte wird der Volumendurchfluss ermittelt, auf dessen Basis mit dem Druckabfall die Viskosität zu bestimmen ist. Der Volumendurchfluss, welcher zur Viskositätsbestimmung herangezogen wird, beruht aber gerade auf der fehlerhaften Dichtemessung. Es ist daher die Aufgabe der Erfindung, hier Abhilfe zu schaffen. Kotolay et al. beschreiben ausserdem in "Density and viscosity monitoring systems using Coriolis flow meter" (ISA transactions, Instrument society of America, Pittsburgh, US, Bd. 38; Nr. 4; Seiten 303 - 310, ISSN: 0019-0578) eine voneinander getrennte Dichte- und Viskostätsbestimmung, ohne auf die Querempfindlichkeit einzugehen. US 5,339,258 zeigt eine Viskositätskorrektur in einer Dichtemessung auf Basis von mehreren Messungen.

Die Aufgabe wird erfindungsgemäß gelöst durch die Messanordnung gemäß dem unabhängigen Patentanspruch 1 und das Verfahren zum Bestimmen der Dichte eines Mediums gemäß dem unabhängigen Patentanspruch 16.

Die erfindungsgemäße Messanordnung zum Messen der Dichte von fließfähigen Medien, umfasst: einen Fluidpfad zum Führen eines Mediums;
eine Pumpe, welche in dem Fluidpfad angeordnet ist, zum Treiben eines definierten Volumenstroms des Mediums in dem Fluidpfad;
eine Differenzdruckmessanordnung zum Erfassen eines Druckabfalls aufgrund des Volumenstroms des Mediums zwischen einem ersten Druckabgriff in dem Fluidpfad und einem zweiten Druckabgriff in dem Fluidpfad;
einen Dichtemesser mit einem mindestens Oszillator welcher mindestens ein schwingfähiges Messrohr, zum Führen des Mediums aufweist, mit mindestens einer Erregeranordnung zum Anregen von Schwingungen des Messrohrs, und mit mindestens einer Sensoranordnung zum Erfassen mindestens einer Schwingungseigenschaft des Oszillators, wobei das Messrohr oder die Messrohre des mindestens einen Oszillators in dem Fluidpfad angeordnet ist;
eine Auswertungsvorrichtung, welche dazu eingerichtet ist, anhand des Volumenstroms, des volumenstromabhängigen Druckabfalls und der mindestens einen Schwingungseigenschaft des Oszillators die Dichte des Mediums zu ermitteln.

In einer Weiterbildung der Erfindung ist die Auswertevorrichtung dazu eingerichtet, anhand des Volumenstroms und des volumenstromabhängigen Druckabfalls zunächst die Viskosität des Mediums zu ermitteln, und dann anhand dieser ermittelten Viskosität und der mindestens einen Schwingungseigenschaft des Oszillators die Dichte des Mediums zu ermitteln.

In einer Weiterbildung der Erfindung umfasst die mindestens eine Schwingungseigenschaft des Oszillators die Resonanzfrequenz des Oszillators, welche von der Dichte des Mediums und dessen Viskosität abhängt.

In einer Weiterbildung der Erfindung umfasst die Pumpe eine Dosierpumpe, insbesondere eine Mikrozahnringpumpe mit einer Genauigkeit von besser als 1%.

In einer Weiterbildung der Erfindung ist das mindestens eine Messrohr des mindestens einen Oszillators, bezogen auf den Volumenstrom des Mediums, zwischen dem ersten Druckabgriff und dem zweiten Druckabgriff angeordnet.

In einer Weiterbildung der Erfindung weist das mindestens eine Messrohr des mindestens einen Oszillators einen Innendurchmesser von nicht mehr als 1 mm, insbesondere nicht mehr als 500 µm, vorzugsweise nicht mehr als 300 µm, und weiter bevorzugt nicht mehr als 200 µm auf, beispielsweise 160 µm.

In einer Weiterbildung der Erfindung weist der mindestens eine Oszillator einen Grundmode einer Biegeschwingung mit einer Resonanzfrequenz von nicht weniger als 1 kHz, insbesondere nicht weniger als 5 kHz und bevorzugt nicht weniger als 10 kHz sowie nicht mehr als 500 kHz, insbesondere nicht mehr als 100 kHz und bevorzugt nicht mehr als 50 kHz auf, wenn das mindestens eine Messrohr des Oszillators mit Wasser gefüllt ist.

Geeignete Dichtemesser sind beispielsweise in der Veröffentlichung WO 2009/076287 A2 offenbart.

In einer Weiterbildung der Erfindung weist die Differenzdruckmessanordnung einen ersten Drucksensor auf, welcher einen Druck an dem ersten Druckabgriffpunkt erfasst, und einen zweiten Drucksensor, welcher einen Druck an dem zweiten Druckabgriffpunkt erfasst, wobei der erste Drucksensor und der zweite Drucksensor ein Absolutdrucksensor oder ein Relativdrucksensor sind.

In einer Weiterbildung der Erfindung umfasst der Dichtemesser einen MEMS-Sensor, welcher das zumindest eine Messrohr des zumindest einen Oszillators umfasst.

In einer Weiterbildung der Erfindung umfasst der MEMS-Sensor weiterhin einen Temperatursensor zum Bereitstellen eines Temperaturmesswerts von der Medientemperatur abhängt.

In einer Weiterbildung der Erfindung weist der Fluidpfad, eine Bypassleitung mit einem Innendurchmesser auf, der nicht weniger als das Fünffache insbesondere nicht weniger als das Zehnfache und bevorzugt nicht weniger als das Zwanzigfache des Durchmessers des Messrohrs des Oszillators beträgt.

In einer Weiterbildung der Erfindung ist die Pumpe in der Bypassleitung angeordnet.

In einer Weiterbildung der Erfindung weist die Bypassleitung eine Drossel auf, wobei das mindestens eine Messrohr des mindestens einem Oszillators parallel zur Drossel geschaltet ist über zwei Verzweigungen in der Bypassleitung, zwischen denen die Drossel angeordnet ist.

In einer Weiterbildung der Erfindung sind die beiden Verzweigungen zwischen den beiden Druckabgriffen angeordnet.

Das erfindungsgemäße Verfahren zum Bestimmen der Dichte eines Mediums, insbesondere mittels einer erfindungsgemäßen Messanordnung, umfasst die folgenden Schritte:
Treiben eines definierten Volumenstroms des Mediums in einem Fluidpfad;
Erfassen eines Druckabfalls aufgrund des Volumenstroms des Mediums zwischen einem ersten Druckabgriff in dem Fluidpfad und einem zweiten Druckabgriff in dem Fluidpfad;
Erfassen mindestens einer Schwingungseigenschaft eines Oszillators, welcher mindestens ein schwingfähiges Messrohr, zum Führen des Mediums in dem Fluidpfad aufweist; und
Ermitteln der Dichte anhand des Volumenstroms, des volumenstromabhängigen Druckabfalls und der mindestens einen Schwingungseigenschaft des Oszillators.

In einer Weiterbildung der Erfindung wird zunächst anhand des Volumenstroms und des volumenstromabhängigen Druckabfalls die Viskosität des Mediums ermittelt, wobei dann anhand dieser ermittelten Viskosität und der mindestens einen Schwingungseigenschaft des Oszillators die Dichte des Mediums ermittelt wird.

In einer Weiterbildung der Erfindung umfasst die mindestens eine Schwingungseigenschaft des Oszillators die Resonanzfrequenz des Oszillators, welche von der Dichte des Mediums und dessen Viskosität abhängt.

Die erfindungsgemäße Messanordnung und das erfindungsgemäße Verfahren sind für Medien mit einer Viskosität von mehr als 50 mPas geeignet, beispielsweise bis zu 500 mPas insbesondere bis zu 1000 mPas. Derartige Viskositäten treten beispielsweise bei Rohöl auf.

Insofern, als die erfindungsgemäße Dichtebestimmung bei einer bekannten Temperatur erfolgt, kann auf eine Referenzdichte bei 15°C gemäß API 11.1 zurückgerechnet werden.

Die Erfindung wird nun anhand eines in der Zeichnung dargestellten Ausführungsbeispiels näher erläutert. Es zeigt:

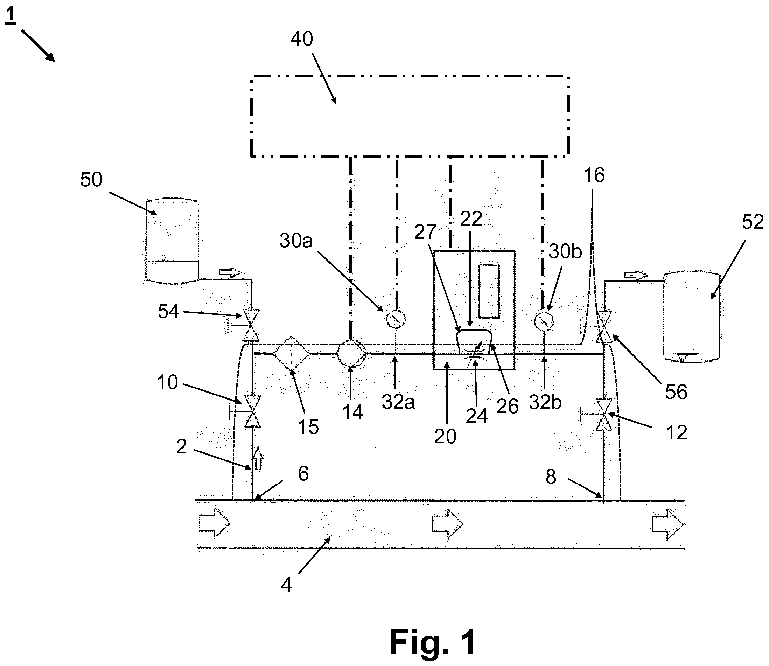

Fig. 1: Eine schematische Darstellung eines Ausführungsbeispiels einer erfindungsgemäßen Messanordnung:
Die Messanordnung 1 umfasst eine Entnahmeleitung 2, die zu einer Rohrleitung 4 zwischen einem ersten Anschlusspunkt 6 und einem zweiten Anschlusspunkt 8 parallel geführt ist, wobei die Entnahmeleitung hier mit einem ersten Ventil 10 nahe dem ersten Anschlusspunkt 6 und einem zweiten Ventil 12 nahe dem zweiten Anschlusspunkt 8 trennbar ist. Die Messanordnung 1 umfasst weiterhin eine Mikrozahnringpumpe 14 wie sie von der Firma HNP erhältlich ist, oder eine andere Dosierpumpe mit einer Fördergenauigkeit von besser als 1% insbesondere besser als 0,5% in der Entnahmeleitung 2 zum Treiben eines definierten Volumenstroms durch den von der Entnahmeleitung 2 und darin angeordneten Komponenten gebildeten Fluidpfad 16. Die Entnahmeleitung weist beispielsweise einen Innendurchmesser von 4 mm auf. In der Entnahmeleitung 2 ist vor der Zahnringpumpe 14 noch ein Filterelement 15 angeordnet, das beispielsweise eine maximale Porengröße von nicht mehr als 20 µm, insbesondere nicht mehr als 10 µm und bevorzugt nicht mehr als 5 µm aufweist, um zu gewährleisten, dass nachfolgende Komponenten nicht verstopfen.

In der Entnahmeleitung 2 ist ein Dichtemesser 20 mit einem schwingfähigen Messrohr 22 angeordnet, welches mittels eines Erregers zu Biegeschwingungen anregbar ist, deren Resonanzfrequenz von der Dichte eines in dem Messrohr enthaltenen Mediums abhängt. Die Resonanzfrequenz weist eine Querempfindlichkeit zur Viskosität des Mediums auf, weshalb letztere ebenfalls zu ermitteln ist. Das Messrohr weist einen Durchmesser von beispielsweise 160 µm auf und ist mittels MEMS-Technologie in Silizium präpariert. Die Resonanzfrequenz liegt bei einer Dichte von 10⁶ g/m³ und einem niederviskosen Medium beispielsweise in der Größenordnung von 20 kHz.

Die Gesamtlänge eines Flussigkeitspfadabschnitts durch das Messrohr 22 und umgebende MEMS-Komponenten mit einem Innendurchmesser von 200 µm beträgt etwa 1 cm. Dieser Flüssigkeitspfadabschnitt hat einen vergleichsweise großen Strömungswiderstand, so dass es nicht praktikabel ist, den gesamten Volumenstrom durch die Entnahmeleitung 2 über diesen Flüssigkeitspfadabschnitt zu führen. Die zu erwartenden Volumenströme bei Druckabfällen von einigen Bar über dem Flüssigkeitspfadabschnitt durch das Messrohr würden derart gering sein, dass das Medium in der Entnahmeleitung 2, insbesondere bei sich ändernden Eigenschaften des Mediums in der Rohrleitung 4 nicht zuverlässig repräsentativ wäre. Daher ist der Flüssigkeitspfadabschnitt durch die MEMS-Komponenten als Bypass 26 parallel zu einer Blende 24 geführt, wobei der Bypass 26 eine Bypasspfadlänge von weniger als 20 mm, insbesondere weniger als 15 mm, beispielsweise 10 mm aufweist. Die Blende 24 weist einen Durchmesser von 0,5 bis 2 mm auf welcher so bemessen ist, dass aufgrund des durch den Volumenstrom in der Entnahmeleitung 2, ein Druckgradient erzeugt wird der einen Anteil des Volumenstroms von beispielsweise 0,1% bis 5% durch den Bypass 26 treibt. Die MEMS-Komponenten umfassen weiterhin einen Temperatursensor 27, beispielsweise ein Halbleiterwiderstandselement, oder ein Pt-Widerstandselement, welches insbesondere eine Temperatur des Messrohrs 22 oder nahe des Messrohrs erfasst, die für die Temperatur des Mediums repräsentativ ist.

Die Messanordnung 1 umfasst weiterhin eine Differenzdruckmessanordnung 30 zum Ermitteln einer Druckdifferenz zwischen einem ersten Druckabgriffpunkt 32a und einem zweiten Druckabgriffpunkt 32b an der Entnahmeleitung 2, wobei der Bypass 26, zwischen den beiden Druckabgriffpunkten 32a, 32b an die Entnahmeleitung angeschlossen ist. Die Differenzdruckmessanordnung umfasst in dieser Ausgestaltung einen ersten Relativdruckmessaufnehmer 30a der Relativdruckmessaufnehmer 30b, der einen zweiten Druck am zweiten Druckabgriff 32b erfasst.

Die Messanordnung 1 umfasst weiter eine Auswerteeinheit 40, welche dazu eingerichtet ist, anhand der Werte für Volumendurchflusses, und dem zugehörigen Differenzdruck einen aktuellen Viskositätsmesswert zu bestimmen, und anhand der gemessenen Resonanzfrequenz bzw. einem daraus abgeleiteten unkompensierten Dichtemesswert einen bezüglich des Viskositätseinflusses korrigierten Dichtemesswert zu berechnen. Weiterhin kann aufgrund der bekannten Temperatur bei der Dichtebestimmung, auf eine Referenzdichte bei 15°C gemäß API 11.1 zurückgerechnet werden.

Die elektrischen Schaltungen der Differenzdruckmessanordnung, des Dichtemessers 20 , sowie der Auswerteeinheit sind vorzugsweise in der Zündschutzart Ex-i (eigensicher) ausgeführt. Die elektronische Schaltung Zahnringpumpe 14 ist vorzugsweise ebenfalls in einer Zündschutzart realisiert, beispielsweise in druckfester Kapselung gemäß der Klasse Ex-d.

Die Messanordnung kann weiterhin ein Reservoir 50 und einen Sammelbehälter 52 für ein Hilfsmedium aufweisen die zwischen dem ersten Ventil 10 und dem Filter 15 bzw. zwischen dem zweiten Relativdruckmessaufnehmer 30b und dem zweiten Ventil 12 über Stichleitungen an die Entnahmeleitung 2 angeschlossen sind. Die Stichleitungen sind über ein drittes Ventil 54, bzw. ein viertes Ventil 56 von der Entnahmeleitung trennbar. Das Hilfsmedium kann einerseits eine Reinigungsflüssigkeit sein, beispielsweise Benzin, oder ein referenzmedium mit definierte Viskosität zum Kalibrieren der Messvorrichtung.

## Patentansprüche

1. Messanordnung (1) zum Messen der Dichte von fließfähigen Medien, umfassend:
einen Fluidpfad (16) zum Führen eines Mediums;
eine Pumpe (14), welche in dem Fluidpfad (16) angeordnet ist, zum Treiben eines Volumenstroms des Mediums in dem Fluidpfad (16), wobei der Volumenstrom ein definierter Volumenstrom ist;
eine Differenzdruckmessanordnung (30a, 30b) zum Erfassen eines Druckabfalls aufgrund des Volumenstroms des Mediums zwischen einem ersten Druckabgriff (32a) und einem zweiten Druckabgriff (32b) in dem Fluidpfad (16);
einen Dichtemesser (20) mit mindestens einem Oszillator welcher mindestens ein schwingfähiges Messrohr (22), zum Führen des Mediums aufweist, mit mindestens einer Erregeranordnung zum Anregen von Schwingungen des Messrohrs, und mit mindestens einer Sensoranordnung zum Erfassen mindestens einer Resonanzfrquenz des Oszillators, wobei das Messrohr oder die Messrohre des mindestens einen Oszillators in dem Fluidpfad angeordnet ist, wobei die Resonanzfrequenz des Oszillators von der Dichte des Mediums und dessen Viskosität abhängt;
eine Auswertungsvorrichtung (40), welche dazu eingerichtet ist die Dichte des Mediums zu ermitteln,
**dadurch gekennzeichnet, dass**
die Auswertungsvorrichtung (40) dazu eingerichtet ist anhand des Volumenstroms, des volumenstromabhängigen Druckabfalls und mindestens der Resonanzfrequenz des Oszillators die Dichte des Mediums zu ermitteln, wobei die Auswertevorrichtung dazu eingerichtet ist, anhand des Volumenstroms und des volumenstromabhängigen Druckabfalls zunächst die Viskosität des Mediums zu ermitteln, und dann anhand dieser ermittelten Viskosität und mindestens der Resonanzfrequenz des Oszillators die Dichte des Mediums zu ermitteln.

2. Messanordnung nach Anspruch 1, wobei die Pumpe (14) eine Dosierpumpe, insbesondere eine Mikrozahnringpumpe mit einer Genauigkeit von besser als 1% umfasst.

3. Messanordnung nach einem der Ansprüche 1 oder 2, wobei das mindestens eine Messrohr (22) des mindestens einen Oszillators bezogen, auf den Volumenstrom des Mediums zwischen dem ersten Druckabgriff (32a) und dem zweiten Druckabgriff (32b) angeordnet ist.

4. Messanordnung nach einem der Ansprüche 1 bis 3, wobei das mindestens eine Messrohr (32) des mindestens einen Oszillators einen Innendurchmesser von nicht mehr als 1 mm, insbesondere nicht mehr als 500 µm, vorzugsweise nicht mehr als 300 µm, und weiter bevorzugt nicht mehr als 200 µm aufweist, beispielsweise etwa 160 µm.

5. Messanordnung nach einem der Ansprüche 1 bis 4, wobei das mindestens der Oszillator einen Grundmode einer Biegeschwingung mit einer Resonanzfrequenz von nicht weniger als 1 kHz, insbesondere nicht weniger als 5 kHz und bevorzugt nicht weniger als 10 kHz sowie nicht mehr als 500 kHz, insbesondere nicht mehr als 100 kHz und bevorzugt nicht mehr als 50 kHz aufweist, wenn das mindestens eine Messrohr des Oszillators mit Wasser gefüllt ist

6. Messanordnung nach einem der Ansprüche 1 bis 5, wobei die Differenzdruckmessanordnung einen ersten Drucksensor aufweist, welcher einen Druck an dem ersten Druckabgriffpunkt erfasst, und einen zweiten Drucksensor, welcher einen Druck an dem zweiten Druckabgriffpunkt erfasst, wobei der erste Drucksensor und der zweite Drucksensor ein Absolutdrucksensor oder ein Relativdrucksensor sind.

7. Messanordnung nach einem der vorhergehenden Ansprüche wobei der Dichtemesser einen MEMS-Sensor umfasst, welcher das zumindest eine Messrohr (22) des zumindest einen Oszillators umfasst.

8. Messanordnung nach Anspruch 7, wobei der MEMS-Sensor weiterhin einen Temperatursensor (27) umfasst zum Bereitstellen eines Temperaturmesswerts, der von der Medientemperatur abhängt.

9. Messanordnung nach einem der vorhergehenden Ansprüche wobei der Fluidpfad eine Bypassleitung mit einem Innendurchmesser aufweist, der nicht weniger als das Fünffache insbesondere nicht weniger als das Zehnfache und bevorzugt nicht weniger als das Zwanzigfache des Durchmessers des Messrohrs des Oszillators beträgt, wobei die Pumpe in der Bypassleitung angeordnet ist, und wobei die die Bypassleitung eine Drossel aufweist, wobei das mindestens eine Messrohr des mindestens einem Oszillators parallel zur Drossel geschaltet ist über zwei Verzweigungen in der Bypassleitung, zwischen denen die Drossel angeordnet ist.

10. Messanordnung nach Anspruch 9, wobei die beiden Verzweigungen zwischen den beiden Druckabgriffen angeordnet sind.

11. Verfahren zum Bestimmen der Dichte eines Mediums, insbesondere mittels einer Vorrichtung nach einem der vorhergehenden Ansprüche, wobei das Verfahren die folgenden Schritte umfasst:
Treiben eines Volumenstroms des Mediums in einem Fluidpfad, wobei der Volumenstrom ein definierter Volumenstrom ist;
Erfassen eines Druckabfalls aufgrund des Volumenstroms des Mediums zwischen einem ersten Druckabgriff in dem Fluidpfad und einem zweiten Druckabgriff in dem Fluidpfad;
Erfassen mindestens einer Resonanzfrequenz eines Oszillators, welcher mindestens ein schwingfähiges Messrohr, zum Führen des Mediums in dem Fluidpfad aufweist, wobei die Resonanzfrequenz des Oszillators von der Dichte des Mediums und dessen Viskosität abhängt; und
Ermitteln der Dichte anhand des Volumenstroms, des volumenstromabhängigen Druckabfalls und mindestens der Resonanzfrequenz des Oszillators,
**dadurch gekennzeichnet, dass**
zunächst anhand des Volumenstroms und des volumenstromabhängigen Druckabfalls die Viskosität des Mediums ermittelt wird und dann anhand dieser ermittelten Viskosität und mindestens der Resonanzfrequenz des Oszillators die Dichte des Mediums ermittelt wird.

## Claims

1. Measuring arrangement (1) designed to measure the density of flowable media, comprising:
a fluid path (16) designed to conduct a medium;
a pump (14), which is arranged in the fluid path (16) and is designed to induce a volume flow of the medium in the fluid path (16), wherein the volume flow is a defined volume flow;
a differential pressure measuring arrangement (30a, 30b) designed to measure a drop in pressure due to the volume flow of the medium between a first pressure tapping point (32a) and a second pressure tapping point (32b) in the fluid path (16);
a density meter (20) with at least an oscillator, which has at least a measuring tube (22) which can vibrate and is designed to conduct the medium, with at least an exciter arrangement to generate vibrations of the measuring tube, and with at least a sensor arrangement to measure at least a resonance frequency of the oscillator, wherein the measuring tube or the measuring tubes of the at least one oscillator is/are arranged in the fluid path, wherein the resonance frequency of the oscillator depends on the density of the medium and the medium's viscosity;
an evaluation unit (40), which is designed to determine the density of the medium, **characterized in that**
the evaluation unit (40) is designed to determine the density of the medium on the basis of the volume flow, the drop in pressure, which depends on the volume flow, and at least the resonance frequency of the oscillator, wherein the evaluation unit is designed to first determine the viscosity of the medium on the basis of the volume flow and the drop in pressure, which depends on the volume flow, and then to determine the density of the medium on the basis of this determined viscosity and at least the resonance frequency of the oscillator.

2. Measuring arrangement as claimed in Claim 1, wherein the pump (14) comprises a dosing pump, particularly a micro annular gear pump with an accuracy better than 1 %.

3. Measuring arrangement as claimed in one of the Claims 1 or 2, wherein the at least one measuring tube (22) of the at least one oscillator is arranged between the first pressure tapping point (32a) and the second pressure tapping point (32b) in relation to the volume flow of the medium.

4. Measuring arrangement as claimed in one of the Claims 1 to 3, wherein the at least one measuring tube (32) of the at least one oscillator has an inner diameter not greater than 1 mm, particularly not greater than 500 µm, preferably not greater than 300 µm, and more preferably not greater than 200 µm, for example around 160 µm.

5. Measuring arrangement as claimed in one of the Claims 1 to 4, wherein the at least one oscillator has a basic mode of a flexural vibration with a resonance frequency not less than 1 kHz, particularly not less than 5 kHz and preferably not less than 10 kHz and not greater than 500 kHz, particularly not greater than 100 kHz and preferably not greater than 50 kHz when the at least one measuring tube of the oscillator is filled with water.

6. Measuring arrangement as claimed in one of the Claims 1 to 5, wherein the differential pressure measuring arrangement comprises a first pressure sensor which measures a pressure at the first pressure tapping point and a second pressure sensor which measures a pressure at the second pressure tapping point, wherein the first pressure sensor and the second pressure sensor are an absolute pressure sensor or a relative pressure sensor.

7. Measuring arrangement as claimed in one of the previous claims, wherein the density meter comprises a MEMS sensor which comprises the at least one measuring tube (22) of the at least one oscillator.

8. Measuring arrangement as claimed in Claim 7, wherein the MEMS sensor further comprises a temperature sensor (27) designed to provide a temperature measured value that depends on the temperature of the medium.

9. Measuring arrangement as claimed in one of the previous claims, wherein the fluid path comprises a bypass line with an inner diameter which is not less than five times, particularly not less than ten times and preferably not less than twenty times the diameter of the measuring tube of the oscillator, wherein the pump is arranged in the bypass line, and wherein the bypass line has a throttle, wherein the at least one measuring tube of the at least one oscillator is switched in parallel to the throttle via two branches in the bypass line between which the throttle is arranged.

10. Measuring arrangement as claimed in Claim 9, wherein the two branches are arranged between the two pressure tapping points.

11. Procedure for determining the density of a medium, particularly using an apparatus as claimed in one of the previous claims, wherein the procedure comprises the following steps:
Inducing of a volume flow of the medium in a fluid path, wherein the volume flow is a defined volume flow;
Measurement of a drop in pressure due to a volume flow of the medium between a first pressure tapping point in the fluid path and a second pressure tapping point in the fluid path;
Measurement of at least a resonance frequency of an oscillator, which comprises at least a measuring tube which can vibrate, said tube being designed to conduct the medium in the fluid path, wherein the resonance frequency of the oscillator depends on the density of the medium and the medium's viscosity; and
Determination of the density using the volume flow, the drop in pressure that depends on the volume flow and at least the resonance frequency of the oscillator **characterized in that**
the viscosity of the medium is first determined on the basis of the volume flow and the drop in pressure, which depends on the volume flow, and then the density of the medium is determined on the basis of this determined viscosity and at least the resonance frequency of the oscillator.

## Revendications

1. Dispositif de mesure (1) destiné à la mesure de la densité de produits aptes à s'écouler, comprenant :
un trajet de fluide (16) destiné à guider un produit ;
une pompe (14), laquelle est disposée dans le trajet de fluide (16) et qui est destinée à entraîner un débit volumique du produit dans le trajet de fluide (16), le débit volumique étant un débit volumique défini ;
un dispositif de mesure de pression différentielle (30a, 30b) destiné à la mesure d'une chute de pression en raison du débit volumique entre une première prise de pression (32a) et une deuxième prise de pression (32b) dans le trajet de fluide (16) ;
un densimètre (20) avec au moins un oscillateur, lequel comprend au moins un tube de mesure (22) apte à vibrer, destiné à guider le produit, avec au moins un dispositif d'excitation destiné à générer les vibrations du tube de mesure, et avec au moins un agencement de capteurs destiné à la mesure d'au moins une fréquence de résonance de l'oscillateur, le tube de mesure ou les tubes de mesure de l'au moins un oscillateur étant disposés dans le trajet de fluide, la fréquence de résonance de l'oscillateur dépendant de la densité du produit et de sa viscosité ;
un dispositif d'évaluation (40), lequel est conçu de telle sorte à déterminer la densité du produit,
**caractérisé en ce que**
le dispositif d'évaluation (40) est conçu de telle sorte à déterminer la densité du produit sur la base du débit volumique, de la chute de pression dépendant du débit volumique et d'au moins la fréquence de résonance de l'oscillateur, le dispositif d'évaluation étant conçu pour déterminer d'abord la viscosité du produit sur la base du débit volumique et de la chute de pression dépendant du débit volumique, puis pour déterminer la densité du produit sur la base de cette viscosité déterminée et d'au moins la fréquence de résonance de l'oscillateur.

2. Dispositif de mesure selon la revendication 1, pour lequel la pompe (14) comprend une pompe de dosage, notamment une micropompe à couronnes dentées d'une précision supérieure à 1 %.

3. Dispositif de mesure selon l'une des revendications 1 ou 2, pour lequel l'au moins un tube de mesure (22) de l'au moins un oscillateur est disposé entre la première prise de pression (32a) et la deuxième prise de pression (32b) par rapport au débit volumique du produit.

4. Dispositif de mesure selon l'une des revendications 1 à 3, pour lequel l'au moins un tube de mesure (32) de l'au moins un oscillateur présente un diamètre intérieur ne dépassant pas 1 mm, notamment ne dépassant pas 500 µm , de préférence ne dépassant pas 300 µm , et particulièrement de préférence ne dépassant pas 200 µm , par exemple environ 160 µm.

5. Dispositif de mesure selon l'une des revendications 1 à 4, pour lequel au moins l'oscillateur présente un mode fondamental d'une vibration de flexion avec une fréquence de résonance non inférieure à 1 kHz, notamment non inférieure à 5 kHz et de préférence non inférieure à 10 kHz et non supérieure à 500 kHz, notamment non supérieure à 100 kHz et de préférence non supérieure à 50 kHz, lorsque l'au moins un tube de mesure de l'oscillateur est rempli d'eau.

6. Dispositif de mesure selon l'une des revendications 1 à 5, pour lequel le dispositif de mesure de pression différentielle comprend un premier capteur de pression mesurant une pression au premier point de prise de pression et un second capteur de pression mesurant une pression au second point de prise de pression, le premier capteur de pression et le second capteur de pression étant un capteur de pression absolue ou un capteur de pression relative.

7. Dispositif de mesure selon l'une des revendications précédentes, pour lequel le densimètre comprend un capteur MEMS comprenant l'au moins un tube de mesure (22) de l'au moins un oscillateur.

8. Dispositif de mesure selon la revendication 7, pour lequel le capteur MEMS comprend en outre un capteur de température (27) destiné à fournir une valeur mesurée de température qui dépend de la température du produit.

9. Dispositif de mesure selon l'une des revendications précédentes, pour lequel le trajet de fluide comprend une conduite de bypass dont le diamètre intérieur n'est pas inférieur à cinq fois, notamment pas inférieur à dix fois et de préférence pas inférieur à vingt fois le diamètre du tube de mesure de l'oscillateur, la pompe étant disposée dans la conduite de bypass, et la conduite de bypass comportant un étrangleur, l'au moins un tube de mesure de l'au moins un oscillateur étant connecté en parallèle avec l'étrangleur par l'intermédiaire de deux dérivations dans la conduite de bypass entre lesquelles l'étrangleur est disposé.

10. Dispositif de mesure selon la revendication 9, pour lequel les deux dérivations sont disposées entre les deux prises de pression.

11. Procédé destiné à la détermination de la densité d'un produit, notamment au moyen d'un dispositif selon l'une des revendications précédentes, le procédé comprenant les étapes suivantes :
Entraînement d'un débit volumique du produit dans un trajet de fluide, le débit volumique étant un débit volumique défini ;
Mesure d'une chute de pression due au débit volumique du fluide entre une première prise de pression dans le trajet du fluide et une deuxième prise de pression dans le trajet du fluide ;
Mesure d'au moins une fréquence de résonance d'un oscillateur, qui comprend au moins un tube de mesure apte à vibrer, lequel tube est destiné à guider le produit dans le trajet du fluide, la fréquence de résonance de l'oscillateur dépendant de la densité du produit et de sa viscosité ; et
Détermination de la densité en utilisant le débit volumique, la chute de pression dépendant du débit volumique et au moins la fréquence de résonance de l'oscillateur
**caractérisé**
**en ce que** la viscosité du produit est d'abord déterminée sur la base du débit volumique et de la chute de pression dépendant du débit volumique, puis la densité du produit est déterminée sur la base de cette viscosité déterminée et au moins de la fréquence de résonance de l'oscillateur.
